# EUROPEAN PATENT APPLICATION

(11) **EP 4 694 340 A1**
(43) Date of publication of application: **11.02.2026**
(21) Application number: 24806428.9
(22) Date of filing: 08.05.2024
(51) Int. Cl.: H04W 36/00

(54) **COMMUNICATION METHOD AND APPARATUS**

(30) Priority: 12.05.2023 CN 202310541312
(71) Applicant: Huawei Technologies Co., Ltd., Shenzhen, Guangdong 518129 (CN)
(72) Inventor: ZHAO, Wangsheng, Shenzhen, Guangdong 518129 (CN); HUANG, Guogang, Shenzhen, Guangdong 518129 (CN); ZHOU, Yun, Shenzhen, Guangdong 518129 (CN); LUO, Hui, Shenzhen, Guangdong 518129 (CN); SONG, Jiajing, Shenzhen, Guangdong 518129 (CN)
(74) Representative: Goddar, Heinz J.
(86) International application number: PCT/CN2024/091746
(87) International publication number: WO 2024/235076

(57) **Abstract**

A communication method and apparatus are provided, and relate to the field of communication technologies. The method includes: When a current AP MLD determines that a non-AP MLD roams from the current AP MLD to a target AP MLD, and data exists in a send buffer (the send buffer is used to buffer data of the current AP MLD and data of the non-AP MLD) of the current AP MLD, the current AP MLD may send all the data in the send buffer to the non-AP MLD, or the current AP MLD may send all the data in the send buffer to the target AP MLD, so that the non-AP MLD can receive, from the target AP MLD, the data from the current AP MLD. This reduces a packet loss in a roaming handover process of the non-AP MLD, and further improves communication reliability of the non-AP MLD in the roaming process.

## Description

This application claims priority to Chinese Patent Application No. 202310541312.2, filed with the China National Intellectual Property Administration on May 12, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a wireless communication device may support multi-link communication, for example, perform communication on a plurality of links in different communication frequency bands (for example, 2.4 GHz, 5 GHz, and 6 GHz), or perform communication on different channels in a same communication frequency band. A communication device that supports multi-link communication may be referred to as a multi-link device (multi-link device, MLD). The multi-link device includes an access point (access point, AP) MLD and a non-access point (non-access point, non-AP) MLD.

When the non-AP MLD moves, link quality decreases as a distance between the non-AP MLD and an associated AP MLD increases and/or an obstacle appears. In this case, roaming of the non-AP MLD may be triggered. The non-AP MLD roams to an AP MLD that provides a higher-quality link, to meet a requirement of a service for communication quality. However, when the non-AP MLD roams, a packet loss may occur, affecting communication reliability of the non-AP MLD in a roaming process.

### SUMMARY

This application provides a communication method and apparatus, to reduce a packet loss in a roaming handover process of a non-AP MLD, and further improve communication reliability of the non-AP MLD in the roaming process.

According to a first aspect, a communication method is provided, including: A current AP MLD determines that data exists in a send buffer of the current AP MLD, where the send buffer is used to buffer data of the current AP MLD and data of a non-AP MLD, and the non-AP MLD triggers a tentative association with a target AP MLD; and the current AP MLD sends all the data in the send buffer to the non-AP MLD or the target AP MLD, where the target AP MLD is configured to send the data that is from the current AP MLD to the non-AP MLD.

In the foregoing embodiment, that the non-AP MLD triggers the tentative association with the target AP MLD indicates that the non-AP MLD starts to roam to the target AP MLD. In this case, after determining that the data exists in the send buffer of the current AP MLD, the current AP MLD may send all the data in the send buffer to the non-AP MLD, or send all the data in the send buffer to the target AP MLD, so that the target AP MLD can forward the data that is from the current AP MLD to the non-AP MLD. This reduces a packet loss in a roaming handover process of the non-AP MLD, and further improves communication reliability of the non-AP MLD in the roaming process.

With reference to the first aspect, in a possible implementation, it is (pre-) defined in a protocol that when the current AP MLD determines that the non-AP MLD triggers the tentative association with the target AP MLD, data that starts from a window start location (WinStart_O) and that is in the send buffer of the current AP MLD is not cleared, for example, one or more of to-be-sent data (that is, data that is not sent by the current AP MLD to the non-AP MLD) and unsuccessfully sent data (that is, data that is not successfully sent by the current AP MLD to the non-AP MLD). Alternatively, it is (pre-) defined in a protocol that a transmitter (for example, the current AP MLD) does not clear data that starts from a window start location and that is in a send buffer of the transmitter, for example, one or more of to-be-sent data (that is, data that is not sent by the transmitter) and unsuccessfully sent data (that is, data that is not successfully sent by the transmitter).

In the foregoing embodiment, it can be ensured that when the non-AP MLD triggers the tentative association with the target AP MLD, the data that starts from the window start location and that is in the send buffer is not cleared.

With reference to the first aspect, in a possible implementation, the method further includes: When the current AP MLD does not support a first capability, the current AP MLD clears successfully sent data in the send buffer; or when the current AP MLD supports a first capability, the current AP MLD retains successfully sent data that starts from the window start location and that is in the send buffer, where the first capability is a capability of the current AP MLD to still retain the successfully sent data that starts from the window start location and that is in the send buffer when the current AP MLD determines that the non-AP MLD triggers the tentative association with the target AP MLD.

In the foregoing embodiment, when the current AP MLD does not support the first capability, the current AP MLD clears the successfully sent data in the send buffer. This indicates that block acknowledgement (block acknowledgement, BA) session information between the current AP MLD and the non-AP MLD needs to be transferred when the non-AP MLD roams to the target AP MLD, that is, BA session transfer needs to be performed. This can reduce or avoid service interruption in a roaming handover process of the non-AP MLD, and further improve communication reliability of the non-AP MLD in the roaming process. When the current AP MLD supports the first capability, the current AP MLD retains the successfully sent data that starts from the window start location and that is in the send buffer. This indicates that BA session transfer may not be performed when the non-AP MLD roams to the target AP MLD.

With reference to the first aspect, in a possible implementation, the method further includes: When the current AP MLD supports the first capability and the current AP MLD determines that the non-AP MLD triggers the tentative association with the target AP MLD, the current AP MLD deletes BA session information between the current AP MLD and the non-AP MLD; or when the current AP MLD does not support the first capability and the current AP MLD determines that the non-AP MLD triggers the tentative association with the target AP MLD, the current AP MLD retains BA session information between the current AP MLD and the non-AP MLD.

In the foregoing embodiment, when the current AP MLD supports the first capability and the current AP MLD determines that the non-AP MLD triggers the tentative association with the target AP MLD, the current AP MLD may delete the BA session information between the current AP MLD and the non-AP MLD, to avoid BA session transfer. When the current AP MLD does not support the first capability and the current AP MLD determines that the non-AP MLD triggers the tentative association with the target AP MLD, the current AP MLD needs to retain the BA session information between the current AP MLD and the non-AP MLD. This ensures that BA session transfer can be performed when the non-AP MLD roams to the target AP MLD, to avoid a packet loss caused by roaming handover.

With reference to the first aspect, in a possible implementation, the method further includes: The current AP MLD sends, to the target AP MLD, the BA session information between the current AP MLD and the non-AP MLD.

In the foregoing embodiment, the target AP MLD needs to use the BA session information between the current AP MLD and the non-AP MLD. This can reduce or avoid service interruption in a roaming handover process of the non-AP MLD, and further improve communication reliability of the non-AP MLD in the roaming process.

With reference to the first aspect, in a possible implementation, the method further includes: The current AP MLD sends first information to the non-AP MLD, where the first information indicates that the data in the send buffer is not completely transmitted.

In the foregoing embodiment, the current AP MLD may send the first information to the non-AP MLD, to prevent the non-AP MLD from triggering downlink transmission with the target AP MLD and/or deleting a key with the current AP MLD when the current AP MLD does not complete data transmission.

The key in this application may include at least one of the following: a transient key (pairwise transient key, PTK), a group transient key (group transient key, GTK), an integrity group transient key (integrity group transient key, IGTK), and a beacon integrity group transient key (beacon integrity group transient key, BIGTK).

With reference to the first aspect, in a possible implementation, the first information is carried in a more data (more data) field of a first frame, the more data field of the first frame is set to 1, and the first frame is a data frame or a disassociation (disassociation) frame.

With reference to the first aspect, in a possible implementation, the method further includes: The current AP MLD sends second information to the non-AP MLD or the target AP MLD, where the second information indicates that all the data in the send buffer has been transmitted.

In the foregoing embodiment, the non-AP MLD may learn whether the current AP MLD has completed data transmission.

With reference to the first aspect, in a possible implementation, the second information is carried in a more data field of a second frame, the more data field of the second frame is set to 0, and the second frame is a data frame or a disassociation frame.

With reference to the first aspect, in a possible implementation, the method further includes: The current AP MLD receives third information from the target AP MLD, where the third information is used to request all the data in the send buffer. In other words, the third information is used to request to transfer all the data in the send buffer.

With reference to the first aspect, in a possible implementation, the method further includes: The current AP MLD receives fourth information from the target AP MLD, where the fourth information is used to request the BA session information between the current AP MLD and the non-AP MLD. In other words, the fourth information is used to request to transfer the BA session information between the current AP MLD and the non-AP MLD to the target AP MLD.

With reference to the first aspect, in a possible implementation, the method further includes: The current AP MLD obtains fifth information, where the fifth information indicates that the target AP MLD supports BA session transfer.

With reference to the first aspect, in a possible implementation, the method further includes: The current AP MLD sends sixth information to the non-AP MLD, where the sixth information indicates the non-AP MLD to retain the BA session information between the current AP MLD and the non-AP MLD. Optionally, the sixth information may include a service identifier, and the service identifier is associated with the BA session information between the current AP MLD and the non-AP MLD. The service identifier in this application may also be referred to as a traffic identifier (traffic identity, TID).

In the foregoing embodiment, it is ensured that BA session transfer can be performed when the non-AP MLD roams to the target AP MLD, to avoid a packet loss caused by roaming handover. In addition, when the sixth information includes the service identifier, the non-AP MLD may retain the BA session information associated with the service identifier.

With reference to the first aspect, in a possible implementation, the sixth information may further indicate the non-AP MLD to retain data in a receive buffer of the non-AP MLD and/or a scoreboard (scoreboard) of the non-AP MLD. The receive buffer is configured to buffer data received by the non-AP MLD from the current AP MLD. The scoreboard is used to record data that is successfully received by the non-AP MLD and/or data that is not successfully received by the non-AP MLD, for example, data that is successfully received from the current AP MLD, or data that is not successfully received from the current AP MLD.

In the foregoing embodiment, it is ensured that data in the receive buffer is not cleared when the non-AP MLD roams to the target AP MLD.

With reference to the first aspect, in a possible implementation, the method further includes: The current AP MLD sends seventh information to the non-AP MLD, where the seventh information indicates that the current AP MLD supports BA session transfer.

With reference to the first aspect, in a possible implementation, the method further includes: The current AP MLD receives eighth information from the non-AP MLD, where the eighth information indicates the current AP MLD to retain the BA session information between the current AP MLD and the non-AP MLD. Optionally, the eighth information may include a service identifier, and the service identifier is associated with the BA session information between the current AP MLD and the non-AP MLD.

In the foregoing embodiment, it is ensured that BA session transfer can be performed when the non-AP MLD roams to the target AP MLD, to avoid a packet loss caused by roaming handover. In addition, when the eighth information includes the service identifier, the non-AP MLD may retain the BA session information associated with the service identifier.

According to a second aspect, a communication method is provided, including: A non-AP MLD receives all data from a send buffer of a current AP MLD, where the send buffer is used to buffer data of the current AP MLD and data of the non-AP MLD; or a non-AP MLD receives all data from a send buffer of a current AP MLD through a target AP MLD, where the non-AP MLD triggers a tentative association with the target AP MLD.

In the foregoing embodiment, that the non-AP MLD triggers the tentative association with the target AP MLD indicates that the non-AP MLD starts to roam to the target AP MLD. In this case, the non-AP MLD receives all the data from the send buffer of the current AP MLD, or the non-AP MLD receives all the data from the send buffer of the current AP MLD through the target AP MLD. This reduces a packet loss in a roaming handover process of the non-AP MLD, and further improves communication reliability of the non-AP MLD in the roaming process.

With reference to the second aspect, in a possible implementation, the method further includes: The non-AP MLD receives first information from the current AP MLD, where the first information indicates that the data in the send buffer is not completely transmitted.

In the foregoing embodiment, the current AP MLD may send the first information to the non-AP MLD, to prevent the non-AP MLD from triggering downlink transmission with the target AP MLD and/or deleting a key with the current AP MLD when the current AP MLD does not complete data transmission.

With reference to the second aspect, in a possible implementation, the first information is carried in a more data field of a first frame, the more data field of the first frame is set to 1, and the first frame is a data frame or a disassociation frame.

With reference to the second aspect, in a possible implementation, the method further includes: The non-AP MLD receives second information from the current AP MLD, where the second information indicates that all the data in the send buffer has been transmitted.

In the foregoing embodiment, the non-AP MLD may learn whether the current AP MLD has completed data transmission.

With reference to the second aspect, in a possible implementation, the second information is carried in a more data field of a second frame, the more data field of the second frame is set to 0, and the second frame is a data frame or a disassociation frame.

With reference to the second aspect, in a possible implementation, it is predefined in a protocol that, when the non-AP MLD triggers the tentative association with the target AP MLD, at least one of the following is retained: a key between the current AP MLD and the non-AP MLD, BA session information between the current AP MLD and the non-AP MLD, a key between the target AP MLD and the non-AP MLD, and BA session information between the target AP MLD and the non-AP MLD.

In the foregoing embodiment, it is ensured that communication between the current AP MLD and the non-AP MLD, communication between the current AP MLD and the target AP MLD, and the like are not interfered in a roaming handover process of the non-AP MLD.

With reference to the second aspect, in a possible implementation, the method further includes: The non-AP MLD sends ninth information to the target AP MLD, where the ninth information indicates the target AP MLD to obtain the BA session information between the current AP MLD and the non-AP MLD. Optionally, the ninth information further includes a service identifier, and the service identifier is associated with the BA session information between the current AP MLD and the non-AP MLD.

In the foregoing embodiment, it indicates that the target AP MLD needs to obtain the BA session information between the current AP MLD and the non-AP MLD, so that the BA session information between the current AP MLD and the non-AP MLD can still be used. This can reduce or avoid service interruption in a roaming handover process of the non-AP MLD, and further improve communication reliability of the non-AP MLD in the roaming process. In addition, the target AP MLD may learn of BA session information that needs to be transferred from the current AP MLD to the target AP MLD.

With reference to the second aspect, in a possible implementation, the method further includes: The non-AP MLD receives sixth information from the current AP MLD, where the sixth information indicates the non-AP MLD to retain the BA session information between the current AP MLD and the non-AP MLD. Optionally, the sixth information may include a service identifier, and the service identifier is associated with the BA session information between the current AP MLD and the non-AP MLD.

In the foregoing embodiment, it is ensured that BA session transfer can be performed when the non-AP MLD roams to the target AP MLD, to avoid a packet loss caused by roaming handover. In addition, when the sixth information includes the service identifier, the non-AP MLD may retain the BA session information associated with the service identifier.

With reference to the second aspect, in a possible implementation, the sixth information may further indicate the non-AP MLD to retain data in a receive buffer of the non-AP MLD and/or a scoreboard of the non-AP MLD. The receive buffer is configured to buffer data received by the non-AP MLD from the current AP MLD.

In the foregoing embodiment, it is ensured that data in the receive buffer is not cleared when the non-AP MLD roams to the target AP MLD.

With reference to the second aspect, in a possible implementation, the method further includes: The non-AP MLD receives seventh information from the current AP MLD, where the seventh information indicates that the current AP MLD supports BA session transfer.

With reference to the second aspect, in a possible implementation, the method further includes: The non-AP MLD sends eighth information to the current AP MLD, where the eighth information indicates the current AP MLD to retain the BA session information between the current AP MLD and the non-AP MLD. Optionally, the eighth information may include a service identifier, and the service identifier is associated with BA session information between the current AP MLD and the non-AP MLD.

In the foregoing embodiment, it is ensured that BA session transfer can be performed when the non-AP MLD roams to the target AP MLD, to avoid a packet loss caused by roaming handover. In addition, when the eighth information includes the service identifier, the non-AP MLD may retain the BA session information associated with the service identifier.

According to a third aspect, a communication method is provided, including: A target AP MLD receives all data from a send buffer of a current AP MLD, where the send buffer is used to buffer data of the current AP MLD and data of a non-AP MLD, and the non-AP MLD triggers a tentative association with the target AP MLD; and wen the tentative association between the target AP MLD and the non-AP MLD is activated, the target AP MLD sends the data that is from the current AP MLD to the non-AP MLD.

In the foregoing embodiment, that the non-AP MLD triggers the tentative association with the target AP MLD indicates that the non-AP MLD starts to roam to the target AP MLD. In this case, the target AP MLD sends the data that is from the current AP MLD to the non-AP MLD. This reduces a packet loss in a roaming handover process of the non-AP MLD, and further improves communication reliability of the non-AP MLD in the roaming process.

With reference to the third aspect, in a possible implementation, the method further includes: The target AP MLD receives, from the current AP MLD, BA session information between the current AP MLD and the non-AP MLD; and that the target AP MLD sends the data that is from the current AP MLD to the non-AP MLD includes: The target AP MLD sends the data that is from the current AP MLD to the non-AP MLD based on the BA session information.

In the foregoing embodiment, it may indicate that the target AP MLD still uses the BA session information between the current AP MLD and the non-AP MLD. This can reduce or avoid service interruption in a roaming handover process of the non-AP MLD, and further improve communication reliability of the non-AP MLD in the roaming process.

With reference to the third aspect, in a possible implementation, the method further includes: The target AP MLD receives address information of the current AP MLD from the non-AP MLD; and when the non-AP MLD associated with the current AP MLD is tentatively associated with the target AP MLD, the target AP MLD sends third information to the current AP MLD based on the address information of the current AP MLD, where the third information is used to request all the data in the send buffer.

With reference to the third aspect, in a possible implementation, the method further includes: The target AP MLD sends fourth information to the current AP MLD based on the address information of the current AP MLD, where the fourth information is used to request the BA session information between the current AP MLD and the non-AP MLD.

With reference to the third aspect, in a possible implementation, the method further includes: The target AP MLD broadcasts fifth information, where the fifth information indicates that the target AP MLD supports BA session transfer.

With reference to the third aspect, in a possible implementation, the method further includes: The target AP MLD receives ninth information from the non-AP MLD, where the ninth information indicates the target AP MLD to obtain the BA session information between the current AP MLD and the non-AP MLD.

In the foregoing embodiment, it indicates that the target AP MLD needs to obtain the BA session information between the current AP MLD and the non-AP MLD, so that the BA session information between the current AP MLD and the non-AP MLD can still be used. This can reduce or avoid service interruption in a roaming handover process of the non-AP MLD, and further improve communication reliability of the non-AP MLD in the roaming process. In addition, the target AP MLD may learn of BA session information that needs to be transferred from the current AP MLD to the target AP MLD.

With reference to the third aspect, in a possible implementation, the ninth information further includes a service identifier corresponding to the data in the send buffer, and the ninth information further indicates the target AP MLD to obtain the BA session information between the current AP MLD and the non-AP MLD. Optionally, the ninth information further includes the service identifier, and the service identifier is associated with the BA session information between the current AP MLD and the non-AP MLD.

In the foregoing embodiment, it indicates that the target AP MLD needs to obtain the BA session information between the current AP MLD and the non-AP MLD, so that the BA session information between the current AP MLD and the non-AP MLD can still be used. This can reduce or avoid service interruption in a roaming handover process of the non-AP MLD, and further improve communication reliability of the non-AP MLD in the roaming process. In addition, the target AP MLD may learn of BA session information that needs to be transferred from the current AP MLD to the target AP MLD.

According to a fourth aspect, a communication method is provided, including: A gateway device receives first information from a current AP MLD, where the first information indicates that a non-AP MLD associated with the current AP MLD triggers a tentative association with a target AP MLD; and the gateway device separately sends one or more pieces of first data to the current AP MLD and the target AP MLD.

In the foregoing embodiment, the gateway device may learn, from the current AP MLD, that the non-AP MLD associated with the current AP MLD triggers the tentative association with the target AP MLD. This indicates that the non-AP MLD starts to roam to the target AP MLD. In this case, the gateway device may separately send same data to the current AP MLD and the target AP MLD, so that when the non-AP MLD hands over data transmission from the current AP MLD to the target AP MLD, the current AP MLD may notify the target AP MLD of data that needs to be sent to the non-AP MLD. In this way, when the current AP MLD does not migrate data to the target AP MLD, the target AP MLD can send, to the non-AP MLD, data that is not successfully sent by the current AP MLD to the non-AP MLD. Therefore, a delay caused by data migration can be avoided, a packet loss in a roaming handover process of the non-AP MLD can be reduced, and communication reliability of the non-AP MLD in the roaming process can be further improved.

With reference to the fourth aspect, in a possible implementation, the method further includes: The gateway device separately sends numbers corresponding to the one or more pieces of first data to the current AP MLD and the target AP MLD.

With reference to the fourth aspect, in a possible implementation, the method further includes: The gateway device receives a data aggregation capability from the target AP MLD; the gateway device receives a data aggregation capability from the current AP MLD; and the gateway device generates the one or more pieces of first data based on the data aggregation capability of the target AP MLD and the data aggregation capability of the current AP MLD.

In the foregoing embodiment, the first data is generated based on the data aggregation capability of the target AP MLD and the data aggregation capability of the current AP MLD. In this way, a quantity of data transmissions can be reduced, and a data transmission rate can be improved.

According to a fifth aspect, a communication method is provided, including: A target AP MLD receives one or more pieces of first data from a gateway device, where the one or more pieces of first data are data sent by the gateway device when the gateway device determines that a non-AP MLD associated with a current AP MLD triggers a tentative association with the target AP MLD; the target AP MLD receives second information from the current AP MLD, where the second information is used by the target AP MLD to determine to-be-sent data from the one or more pieces of first data; and when the tentative association between the target AP MLD and the non-AP MLD is activated, the target AP MLD sends the to-be-sent data to the non-AP MLD.

In the foregoing embodiment, the gateway device may learn, from the current AP MLD, that the non-AP MLD associated with the current AP MLD triggers the tentative association with the target AP MLD. This indicates that the non-AP MLD starts to roam to the target AP MLD. In this case, the gateway device may separately send same data to the current AP MLD and the target AP MLD, so that when the non-AP MLD hands over data transmission from the current AP MLD to the target AP MLD, the current AP MLD may notify the target AP MLD of data that needs to be sent to the non-AP MLD. In this way, when the current AP MLD does not migrate data to the target AP MLD, the target AP MLD can send, to the non-AP MLD, data that is not successfully sent by the current AP MLD to the non-AP MLD. Therefore, a delay caused by data migration can be avoided, a packet loss in a roaming handover process of the non-AP MLD can be reduced, and communication reliability of the non-AP MLD in the roaming process can be further improved.

With reference to the fifth aspect, in a possible implementation, the second information includes a sending status corresponding to the one or more pieces of first data, the sending status includes a success or a failure, and the to-be-sent data includes data whose sending status is a failure and that is in the one or more pieces of first data.

With reference to the fifth aspect, in a possible implementation, the second information further includes a retransmission status corresponding to the one or more pieces of first data, the retransmission status includes a retransmission success or a retransmission failure, and the to-be-sent data further includes data whose retransmission status is a retransmission failure and that is in the one or more pieces of first data.

With reference to the fifth aspect, in a possible implementation, the second information indicates a start number corresponding to the to-be-sent data, and the to-be-sent data is data whose number is greater than or equal to the start number and that is in the one or more pieces of first data.

With reference to the fifth aspect, in a possible implementation, the method further includes: The target AP MLD receives, from the gateway device, numbers corresponding to the one or more pieces of first data.

With reference to the fifth aspect, in a possible implementation, the method further includes: The target AP MLD sends a data aggregation capability of the target AP MLD to the gateway device.

According to a sixth aspect, a communication method is provided, including: A current AP MLD receives one or more pieces of first data from a gateway device, where the one or more pieces of first data are data sent by the gateway device when the gateway device determines that a non-AP MLD associated with the current AP MLD triggers a tentative association with a target AP MLD; and the current AP MLD sends second information to the target AP MLD, where the second information is used by the target AP MLD to determine to-be-sent data from the one or more pieces of first data.

In the foregoing embodiment, the gateway device may learn, from the current AP MLD, that the non-AP MLD associated with the current AP MLD triggers the tentative association with the target AP MLD. This indicates that the non-AP MLD starts to roam to the target AP MLD. In this case, the gateway device may separately send same data to the current AP MLD and the target AP MLD, so that when the non-AP MLD hands over data transmission from the current AP MLD to the target AP MLD, the current AP MLD may notify the target AP MLD of data that needs to be sent to the non-AP MLD. In this way, when the current AP MLD does not migrate data to the target AP MLD, the target AP MLD can send, to the non-AP MLD, data that is not successfully sent by the current AP MLD to the non-AP MLD. Therefore, a delay caused by data migration can be avoided, a packet loss in a roaming handover process of the non-AP MLD can be reduced, and communication reliability of the non-AP MLD in the roaming process can be further improved.

With reference to the sixth aspect, in a possible implementation, the second information includes a sending status corresponding to the one or more pieces of first data, the sending status includes a success or a failure, and the to-be-sent data includes data whose sending status is a failure and that is in the one or more pieces of first data.

With reference to the sixth aspect, in a possible implementation, the second information further includes a retransmission status corresponding to the one or more pieces of first data, the retransmission status includes a retransmission success or a retransmission failure, and the to-be-sent data further includes data whose retransmission status is a retransmission failure and that is in the one or more pieces of first data.

With reference to the sixth aspect, in a possible implementation, the second information indicates a start number corresponding to the to-be-sent data, and the to-be-sent data is data whose number is greater than or equal to the start number and that is in the one or more pieces of first data.

With reference to the sixth aspect, in a possible implementation, the method further includes: The target AP MLD receives, from the gateway device, numbers corresponding to the one or more pieces of first data.

With reference to the sixth aspect, in a possible implementation, the method further includes: The target AP MLD sends a data aggregation capability of the target AP MLD to the gateway device.

According to a seventh aspect, a communication apparatus is provided, including a unit or a module configured to implement the method according to any one of the first aspect to the sixth aspect.

According to an eighth aspect, a communication apparatus is provided. The communication apparatus includes at least one processor and a memory. The memory is configured to store a computer program or instructions. The at least one processor is configured to execute the computer program or the instructions in the memory, so that the method according to any one of the first aspect to the sixth aspect is performed.

According to a ninth aspect, a communication system is provided. The communication system includes a current access point multi-link device and a non-access point multi-link device. The current access point multi-link device is configured to perform the method according to any implementation of the first aspect. The non-access point multi-link device is configured to perform the method according to any implementation of the second aspect.

According to a tenth aspect, a communication system is provided. The communication system includes a current access point multi-link device, a non-access point multi-link device, and a target access point multi-link device. The current access point multi-link device is configured to perform the method according to any implementation of the first aspect. The non-access point multi-link device is configured to perform the method according to any implementation of the second aspect. The target access point multi-link device is configured to perform the method according to any implementation of the third aspect.

According to an eleventh aspect, a communication system is provided. The communication system includes a gateway device, a current access point multi-link device, a non-access point multi-link device, and a target access point multi-link device. The gateway device is configured to perform the method according to any implementation of the fourth aspect. The target access point multi-link device is configured to perform the method according to any implementation of the fifth aspect. The current access point multi-link device is configured to perform the method according to any implementation of the sixth aspect.

According to a twelfth aspect, a computer-readable storage medium is provided. The computer-readable storage medium stores computer instructions, and when the computer instructions are executed, a computer is enabled to perform the method according to any one of the first aspect to the sixth aspect.

According to a thirteenth aspect, a computer program product is provided, including computer program code. When the computer program code is run by a computer, the computer is enabled to perform the method according to any one of the first aspect to the sixth aspect.

According to a fourteenth aspect, a chip is provided. The chip includes at least one processor and an interface. The processor is configured to read and execute instructions stored in a memory. When the instructions are run, the chip is enabled to perform the method according to any one of the first aspect to the sixth aspect.

### BRIEF DESCRIPTION OF DRAWINGS

FIG. 1 is a basic architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a diagram of a to-be-sent queue according to an embodiment of this application;
FIG. 5 is a schematic flowchart of still another communication method according to an embodiment of this application;
FIG. 6 is a diagram of numbers and sequence numbers that are of first data according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of still another communication apparatus according to an embodiment of this application.

### DESCRIPTION OF EMBODIMENTS

The following describes technical solutions in embodiments of this application with reference to accompanying drawings in embodiments of this application. The terms "system" and "network" may be used interchangeably in embodiments of this application. "/" represents an "or" relationship between associated objects unless otherwise specified. For example, A/B may represent A or B. "And/or" in this application is merely an association relationship for describing associated objects, and represents that three relationships may exist. For example, A and/or B may represent the following three cases: Only A exists, both A and B exist, and only B exists, where A and B each may be singular or plural. In addition, in descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity and an execution sequence, and the terms such as "first" and "second" do not limit a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

First, a communication scenario to which embodiments of this application are applicable is described. It should be understood that embodiments of this application may be applicable to a wireless local area network (wireless local area network, WLAN) scenario, and may be applicable to the IEEE 802.11 system standard, for example, 802.11a/b/g, 802.11n, 802.11ac, 802.11ax, or a next generation of 802.11ax, for example, 802.11be or a further next generation. For example, the communication method provided in embodiments of this application may be applied to an MLD roaming scenario of a wireless communication system, for example, a scenario in which a non-AP MLD roams between at least two AP MLDs, or a scenario in which a non-AP MLD transits from a basic service set (basic service set, BSS) to another BSS in a same extended service set (extended service set, ESS). Alternatively, embodiments of this application may be applicable to a wireless local area network system, for example, an internet of things (internet of things, IoT) network or a vehicle-to-everything (Vehicle to X, V2X) network. Certainly, embodiments of this application may be further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a future 6G communication system.

The WLAN starts from the 802.11a/g standard, goes through 802.11n, 802.11ac, and 802.11ax, and goes through 802.11be and Wi-Fi 8 that are currently being discussed. 802.11n may also be referred to as high throughput (high throughput, HT), 802.11 ac may also be referred to as very high throughput (very high throughput, VHT), 802.11ax may also be referred to as high efficiency (high efficient, HE) or Wi-Fi 6, 802.11be may also be referred to as extremely high throughput (extremely high throughput, EHT) or Wi-Fi 7, and standards before HT, such as 802.11a/b/g, may be collectively referred to as non-high throughput (non-HT).

The following describes, by using an example in which embodiments of this application are applicable to a WLAN scenario, a basic architecture of a communication system to which embodiments of this application are applicable.

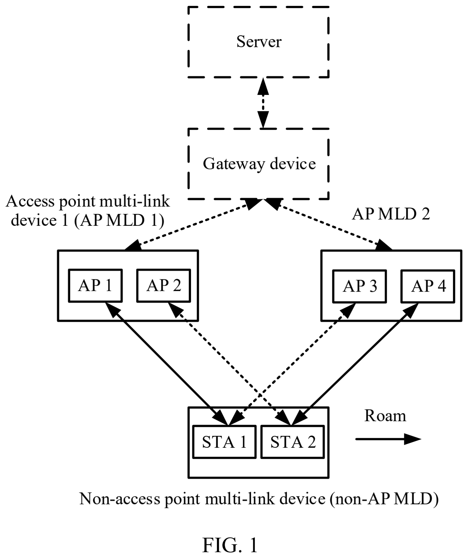

FIG. 1 is a basic architecture of a communication system according to an embodiment of this application.

In FIG. 1, an AP MLD 1, an AP MLD 2, and a non-AP MLD may be included. The AP MLD 1 and the AP MLD 2 each may include at least one AP (FIG. 1 shows that the AP MLD 1 includes an AP 1 and an AP 2, and the AP MLD 2 includes an AP 3 and an AP 4). The non-AP MLD may include at least one STA (FIG. 1 shows that the non-AP MLD includes a STA 1 and a STA 2). The AP MLD 1 may separately communicate with the AP MLD 2 and the non-AP MLD, and the AP MLD 2 may communicate with the non-AP MLD. In other words, in a process in which the non-AP MLD roams from the AP MLD 1 to the AP MLD 2, the non-AP MLD may communicate with the AP MLD 1 through links on which some STAs (for example, the STA 1) in the non-AP MLD operate, and the non-AP MLD may communicate with the AP MLD 2 through a link on which another part of STAs (for example, the STA 2) in the non-AP MLD operate. Optionally, in FIG. 1, a gateway device and a server may be further included. For example, the server may send downlink data to the gateway device, and the gateway device may send the downlink data to the AP MLD 1 and/or the AP MLD 2. For another example, the AP MLD 1 and/or the AP MLD 2 may send uplink data from the non-AP MLD to the gateway device, and the gateway device may send the uplink data to the server. In addition, the AP MLD 1 and the AP MLD 2 herein may be respectively referred to as a current AP MLD and a target AP MLD.

It should be noted that FIG. 1 is merely an example, and should not be considered as a specific limitation on this application. The following describes in detail devices in the communication system shown in FIG. 1.

### 1. STA

STAs in embodiments of this application may be STAs applicable to the IEEE 802.11 system standard, and may be various user terminals, user apparatuses, access apparatuses, subscriber stations, subscriber units, mobile stations, user agents, user equipment, or other devices that have a wireless communication function. The user terminal may include various handheld devices, vehicle-amounted devices, wearable devices, or computing devices that have the wireless communication function, or other processing devices connected to a wireless modem, and various forms of user equipment (user equipment, UE), mobile stations (mobile station, MS), terminals (terminal), terminal devices (terminal equipment), portable communication devices, handheld devices, portable computing devices, entertainment devices, game devices or systems, global positioning system devices, any other suitable device configured to perform network communication via a wireless medium, or the like. For example, the STA may be a router, a switch, a bridge, or the like. Herein, for ease of description, the devices mentioned above are collectively referred to as stations or STAs.

Optionally, the STA may be a terminal product that supports media access control (media access control, MAC) and a physical layer (physical, PHY) of the 802.11 system standard, for example, a mobile phone or a notebook computer.

### 2. AP

The AP in embodiments of this application may be an AP applicable to the IEEE 802.11 system standard, or may be an apparatus that is deployed in a wireless communication network and that provides a wireless communication function for a STA associated with the AP. The AP may be used as a hub of a communication system, and is usually a network side product that supports a MAC and a PHY of the 802.11 system standard, for example, may be a communication device such as a base station, a router, a gateway, a repeater, a communication server, a switch, or a bridge. The base station may include macro base stations, micro base stations, relay stations, and the like in various forms. Herein, for ease of description, the devices mentioned above are collectively referred to as APs.

### 3. MLD

The MLD is a wireless communication device that supports parallel transmission on a plurality of links, and may also be referred to as a multi-band device (multi-band device). Compared with a device that supports only single-link transmission, the MLD has higher transmission efficiency and a higher throughput. A frequency band in which the MLD operates may include one or more frequency bands of sub 1 GHz, 2.4 GHz, 5 GHz, 6 GHz, and 60 GHz. The MLD includes one or more affiliated stations STAs (affiliated STAs), and the affiliated STA is a logical station and may operate on one link. The affiliated station may be an AP or a non-AP STA. For ease of description, in this application, an MLD whose affiliated station is an AP may be referred to as a multi-link AP, a multi-link AP device, or an AP MLD, and an MLD whose affiliated station is a non-AP STA may be referred to as a multi-link STA, a multi-link STA device, a STA MLD, or a non-AP MLD. It should be understood that each station in the MLD may separately operate on one link, but a plurality of stations are allowed to operate on a same link.

### 4. Gateway device

The gateway device in this application may transmit downlink data from the server to the current AP MLD and/or the target AP MLD, and may further transmit uplink data from the non-AP MLD to the server.

### 5. Server

The server in this application may send downlink data to the gateway device, or may receive uplink data from the gateway device. There may be one or more servers.

The server mentioned in embodiments of this application may be one server, or may be a server cluster including a plurality of servers. This is not limited herein.

The following describes in detail the communication method provided in embodiments of this application with reference to FIG. 1.

For ease of understanding, some concepts related to embodiments of this application are described below for reference by using examples. As follows:

### 1. Send buffer

A send buffer of an AP MLD (for example, a current AP MLD or a target AP MLD) may be used to buffer data of the AP MLD and data of a non-AP MLD.

A piece of data mentioned in this application may be a media access control (medium access control, MAC) service data unit (MAC service data unit, MSDU) or an aggregate MSDU (aggregation MSDU, A-MSDU). The A-MSDU may include one or more MSDUs.

In this application, it is (pre-) defined in a protocol that when the current AP MLD determines that the non-AP MLD triggers a tentative association with the target AP MLD, data that starts from a window start location and that is in the send buffer of the current AP MLD is not cleared or is not allowed to be cleared, for example, one or more of to-be-sent data (that is, data that is not sent by the current AP MLD to the non-AP MLD) and unsuccessfully sent data (that is, data that is not successfully sent by the current AP MLD to the non-AP MLD). Optionally, it may be further (pre-) defined in the protocol that when the current AP MLD determines that the non-AP MLD triggers the tentative association with the target AP MLD, one or more of to-be-sent data and unsuccessfully sent data that are before the window start location and that are in the send buffer is allowed to be cleared. Optionally, it may also be understood that, it is (pre-) defined in the protocol that a transmitter (for example, the current AP MLD) does not clear data that starts from a window start location and that is in a send buffer of the transmitter, for example, one or more of to-be-sent data and unsuccessfully sent data (that is, data that is not successfully sent by the transmitter). Certainly, it may be further (pre-) defined in the protocol that the transmitter is allowed to clear one or more of to-be-sent data and unsuccessfully sent data that are before the window start location and that are in the send buffer.

Optionally, the current AP MLD may determine, by receiving first indication information from the non-AP MLD, that the non-AP MLD triggers the tentative association with the target AP MLD. In other words, the first indication information may indicate that the non-AP MLD triggers the tentative association with the target AP MLD. For example, the first indication information may be carried in a target (target) basic service set identifier (BSS identifier, BSSID) field of a basic service set transition management (basic service set transition management, BTM) response (response) frame. The BTM response frame may further include another field. This is not limited in this application.

That "the non-AP MLD triggers the tentative association with the target AP MLD" in this application may be understood as at least one of the following: The non-AP MLD prepares to roam to the target AP MLD, the non-AP MLD starts to roam to the target AP MLD, and the like. The following uses an example in which the non-AP MLD triggers the tentative association with the target AP MLD for description. In addition, the tentative association in this application may be replaced with a tentative reassociation.

Optionally, that the non-AP MLD triggers the tentative association with the target AP MLD may be understood as follows: When some links between the current AP MLD and the non-AP MLD are in a disconnected (or disabled) state, a first STA in the non-AP MLD sends a multi-link association request frame to the target AP MLD, where the multi-link association request frame is used to request the target AP MLD to perform multi-link tentative association with the non-AP MLD. A specific process in which the target AP MLD performs tentative association with the non-AP MLD is not limited in this application. A link between the first STA and the current AP MLD is in the disconnected (or disabled) state, and a link between the first STA and the target AP MLD is in a connected (or enabled) state, but the tentative association between the target AP MLD and the non-AP MLD is not activated. In other words, the gateway device may still deliver, to the current AP MLD, data to be sent to the non-AP MLD. A link between a second STA of the non-AP MLD and the current AP MLD is in the connected (or enabled) state. Optionally, there may be one or more second STAs. Therefore, the current AP MLD may communicate with the non-AP MLD through a link on which the second STA operates. In general, the non-AP MLD is associated with the current AP MLD, and is further tentatively associated with the target AP MLD, but the tentative association between the target AP MLD and the non-AP MLD is not activated.

### 2. BA session (session) information

The BA session information in this application is used to establish a BA session. A specific process of establishing the BA session is not limited herein.

The BA session information in this application may include at least one of the following: a service identifier, a sequence number (sequence number, SN) allocated to each piece of data, an acknowledgement policy, whether data aggregation is allowed, a window start location of a send buffer of an AP MLD (for example, a current AP MLD or a target AP MLD), a window size (WinSize_O) of the send buffer, a sending status (including a success or a failure) of each piece of data in a window, a quantity of retransmissions of each piece of data in the window, a window start location (WinStart_R) of a scoreboard of a non-AP MLD, a window size of the scoreboard, a window start location (WinStart_B) of a receive reorder buffer of the non-AP MLD, and a window size of the receive reorder buffer. The scoreboard is used to record data successfully received by the non-AP MLD and/or data that is not successfully received by the non-AP MLD, for example, data successfully received from an AP MLD (for example, a current AP MLD or a target AP MLD) or data that is not successfully received from the AP MLD (for example, the current AP MLD or the target AP MLD). The receive reorder buffer is used by the non-AP MLD to buffer data from the AP MLD (for example, the current AP MLD or the target AP MLD), and the like. The service identifier may also be referred to as a TID. For details about parameters included in the BA session information, refer to IEEE 802.11. Details are not described herein.

In this application, the BA session information may be classified into two types: BA session information between the current AP MLD and the non-AP MLD, and BA session information between the target AP MLD and the non-AP MLD.

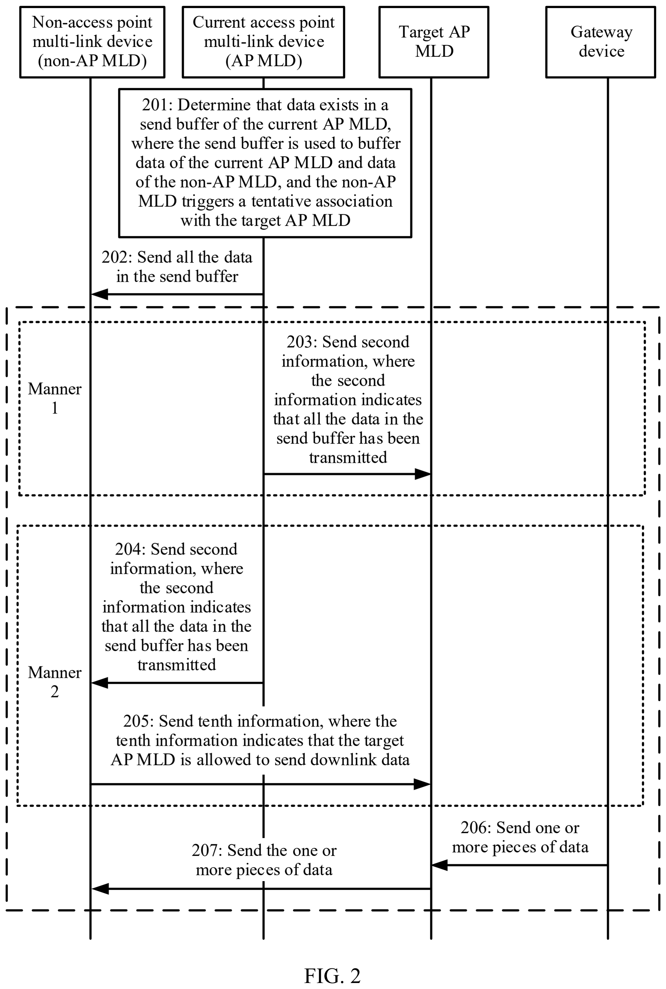

This application provides the embodiment in FIG. 2, FIG. 3, or FIG. 8 to resolve a packet loss in a roaming handover process of a non-AP MLD. The following describes the embodiments in detail.

FIG. 2 is a communication method according to an embodiment of this application. The communication method includes but is not limited to the following steps:
201: A current AP MLD determines that data exists in a send buffer of the current AP MLD, where the send buffer is used to buffer data of the current AP MLD and data of a non-AP MLD, and the non-AP MLD triggers a tentative association with a target AP MLD.

In a possible implementation, step 201 may be understood as follows: The current AP MLD determines that the data exists in the send buffer starting from a window start location. For example, one or more of to-be-sent data (that is, data that is not sent by the current AP MLD to the non-AP MLD) and unsuccessfully sent data (that is, data that is not successfully sent by the current AP MLD to the non-AP MLD) may exist. Optionally, successfully sent data (that is, data that is successfully sent by the current AP MLD to the non-AP MLD) may further exist in the send buffer starting from the window start location. For example, it is (pre-) defined in a protocol that when the current AP MLD determines that the non-AP MLD triggers the tentative association with the target AP MLD, the successfully sent data that starts from the window start location and that is in the send buffer is not allowed to be cleared. Optionally, it may be further (pre-) defined in the protocol that when the current AP MLD determines that the non-AP MLD triggers the tentative association with the target AP MLD, successfully sent data that is before the window start location and that is in the send buffer is allowed to be cleared. For another example, it is (pre-) defined in the protocol that a transmitter (for example, the current AP MLD) does not clear successfully sent data that starts from a window start location and that is in a send buffer of the transmitter. Optionally, it may be further (pre-) defined in the protocol that the transmitter is allowed to clear successfully sent data that is before the window start location and that is in the send buffer.

202: The current AP MLD sends all the data in the send buffer to the non-AP MLD.

Correspondingly, the non-AP MLD receives all the data from the send buffer of the current AP MLD.

In a possible implementation, step 202 may be understood as follows: The current AP MLD sends all the data in the send buffer to the non-AP MLD based on BA session information between the current AP MLD and the non-AP MLD. Optionally, the current AP MLD may send all the data in the send buffer to the non-AP MLD through a single transmission or a plurality of transmissions. For example, the current AP MLD may send one data frame to the non-AP MLD based on the BA session information, where the data frame may include all the data. For another example, the current AP MLD may send a plurality of data frames to the non-AP MLD based on the BA session information, where one of the plurality of data frames may include one or more pieces of all the data. A frame structure of the data frame is not limited in this application.

Optionally, that the current AP MLD sends all the data in the send buffer to the non-AP MLD based on the BA session information may also be understood as follows: The current AP MLD sends all the data in the send buffer to the non-AP MLD on a BA session between the current AP MLD and the non-AP MLD.

In a possible implementation, all the data in the send buffer of the current AP MLD includes one or more of to-be-sent data and unsuccessfully sent data that start from the window start location and that are in the send buffer. To be specific, when the current AP MLD determines that one or more of the to-be-sent data and the unsuccessfully sent data exist in the send buffer starting from the window start location, all the data in the send buffer includes the one or more of the to-be-sent data and the unsuccessfully sent data. Optionally, all the data in the send buffer may further include the successfully sent data that starts from the window start location and that is in the send buffer. To be specific, when the current AP MLD determines that the successfully sent data exists in the send buffer starting from the window start location, all the data in the send buffer may further include the successfully sent data.

Optionally, the method may further include step 203 in Manner 1 in FIG. 2, or the method may further include step 204 and step 205 in Manner 2 in FIG. 2.

### Manner 1

203: The target AP MLD receives second information from the current AP MLD, where the second information indicates that all the data in the send buffer has been transmitted.

Correspondingly, the current AP MLD sends the second information to the target AP MLD.

Optionally, when the target AP MLD receives the second information from the current AP MLD, that the second information indicates that all the data in the send buffer has been transmitted may also be understood as follows: The second information indicates that the target AP MLD is allowed to send downlink data.

### Manner 2

204: The non-AP MLD receives second information from the current AP MLD, where the second information indicates that all the data in the send buffer has been transmitted.

Correspondingly, the current AP MLD sends the second information to the non-AP MLD.

In a possible implementation, when the non-AP MLD receives the second information from the current AP MLD, the second information may be carried in a more data field of a second frame, the more data field of the second frame is set to 0, and the second frame is a data frame or a disassociation frame. A frame structure of the disassociation frame is not limited in this application.

Optionally, the second frame is a last sent data frame, and the second frame further includes remaining data that starts from the window start location and that is in the send buffer. For example, when the current AP MLD may send all the data in the send buffer to the non-AP MLD through a single transmission (that is, the current AP MLD sends one data frame to the non-AP MLD, where the data frame may include all the data), and remaining data herein is all the data. For another example, when the current AP MLD may send all the data in the send buffer to the non-AP MLD through a plurality of transmissions (that is, the current AP MLD may send a plurality of data frames to the non-AP MLD, where the plurality of data frames include the last sent data frame and another data frame), remaining data herein is one or more pieces of data in all the data other than data carried in the another data frame (the data carried in the another data frame is one or more pieces of data that starts from the window start location and that is in the send buffer). Optionally, a more data field of the another data frame may be set to 1, indicating that the data in the send buffer is not completely transmitted.

205: The target AP MLD receives tenth information from the non-AP MLD, where the tenth information indicates that the target AP MLD is allowed to send the downlink data.

Correspondingly, the non-AP MLD sends the tenth information to the target AP MLD.

Optionally, the method may further include step 206.

206: When determining that the non-AP MLD associated with the current AP MLD triggers the tentative association with the target AP MLD, a gateway device sends one or more pieces of data to the target AP MLD.

Correspondingly, the target AP MLD receives the one or more pieces of data from the gateway device.

In a possible implementation, before step 206, the method may further include: The gateway device receives eleventh information from the non-AP MLD through the target AP MLD, where the eleventh information includes address information of the non-AP MLD, for example, a MAC address. Because the address information of the non-AP MLD is sent to the gateway device through the target AP MLD, the gateway device may determine that the non-AP MLD associated with the current AP MLD triggers the tentative association with the target AP MLD.

Optionally, when the non-AP MLD receives the second information from the current AP MLD, the eleventh information may further indicate a first STA in the non-AP MLD to enter a power saving mode, and the first STA tentatively associates with an access point in the target AP MLD. In this way, the target AP MLD needs to wait for triggering of the first STA of the non-AP MLD to send the downlink data. In addition, in this case, that the tenth information in step 205 indicates that the target AP MLD is allowed to send the downlink data may be understood as follows: The tenth information indicates the first STA to hand over from the power saving mode to an active mode. Optionally, the tenth information may be carried in a data frame, a power saving polling (power saving polling, PS-POLL) frame, or a newly defined protected management frame (protect Management frame).

In a possible implementation, the eleventh information may be carried in a power management (power management) field of the data frame, and the power management field may be set to 1.

There is no necessary performing sequence between step 206 and step 201 to step 203. For example, step 206 may be performed before or after any one of step 201 to step 203. Alternatively, step 206 may be performed simultaneously with any one of step 201 to step 203. Similarly, there is no necessary performing sequence between step 206 and step 201, step 202, step 204, and step 205. For example, step 206 may be performed before or after any one of step 201, step 202, step 204, and step 205. Alternatively, step 206 may be performed simultaneously with any one of step 201, step 202, step 204, and step 205.

Optionally, the method may further include step 207.

207: The target AP MLD sends the one or more pieces of data to the non-AP MLD.

Correspondingly, the non-AP MLD receives the one or more pieces of data from the target AP MLD.

Optionally, step 207 may include: The target AP MLD sends the one or more pieces of data to the non-AP MLD through the first STA. For example, the target AP MLD sends the one or more pieces of data to the non-AP MLD through the first STA based on BA session information between the target AP MLD and the non-AP MLD. It may also be understood that the target AP MLD sends the one or more pieces of data to the non-AP MLD on a BA session between the target AP MLD and the non-AP MLD through the first STA.

In the foregoing embodiment, that the non-AP MLD triggers the tentative association with the target AP MLD indicates that the non-AP MLD starts to roam to the target AP MLD. In this case, after determining that the data exists in the send buffer of the current AP MLD, the current AP MLD may send all the data in the send buffer to the non-AP MLD. This reduces a packet loss in a roaming handover process of the non-AP MLD, and further improves communication reliability of the non-AP MLD in the roaming process.

Optionally, in the embodiment shown in FIG. 2, it is predefined in the protocol that, when the non-AP MLD triggers the tentative association with the target AP MLD, at least one of the following is retained: a key between the current AP MLD and the non-AP MLD, the BA session information between the current AP MLD and the non-AP MLD, a key between the target AP MLD and the non-AP MLD, and the BA session information between the target AP MLD and the non-AP MLD. It may also be understood that, it is predefined in the protocol that the non-AP MLD can operate in a dual-channel mode when the non-AP MLD triggers the tentative association with the target AP MLD, one channel maintains one or more of the key between the current AP MLD and the non-AP MLD, the BA session information between the current AP MLD and the non-AP MLD, and the like, and the other channel maintains one or more of the key between the target AP MLD and the non-AP MLD, and the BA session information between the target AP MLD and the non-AP MLD, and the like. In this way, it can be ensured that communication between the current AP MLD and the non-AP MLD, communication between the current AP MLD and the target AP MLD, and the like are not interfered in the roaming handover process of the non-AP MLD.

The key in this application may include at least one of the following: a PTK, a GTK, an IGTK, and a BIGTK.

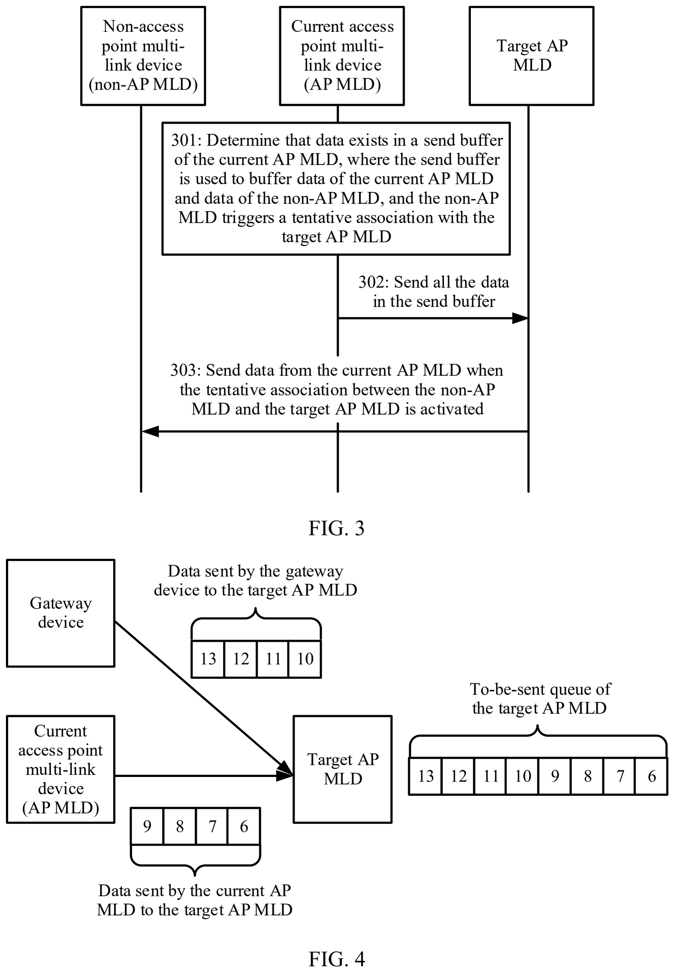

FIG. 3 is another communication method according to an embodiment of this application. The communication method includes but is not limited to the following steps:

301: A current AP MLD determines that data exists in a send buffer of the current AP MLD, where the send buffer is used to buffer data of the current AP MLD and data of a non-AP MLD, and the non-AP MLD triggers a tentative association with a target AP MLD.

Step 301 may be implemented in at least the following three manners. Details are as follows:
Manner 1.1 is similar to step 201 in FIG. 2 Details are not described herein again.

Manner 1.2: When the current AP MLD does not support a first capability, the current AP MLD determines that one or more of to-be-sent data and unsuccessfully sent data exist in the send buffer starting from a window start location. The first capability is a capability of the current AP MLD to still retain successfully sent data that starts from the window start location and that is in the send buffer when the current AP MLD determines that the non-AP MLD triggers the tentative association with the target AP MLD. In other words, the first capability is a capability of allowing clearing data that is before the window start location and that is in the send buffer and a capability of still retaining the successfully sent data that starts from the window start location and that is in the send buffer when the current AP MLD determines that the non-AP MLD triggers the tentative association with the target AP MLD. Therefore, when the current AP MLD does not support the first capability, the current AP MLD may clear the successfully sent data in the send buffer.

Manner 1.3: When the current AP MLD supports a first capability, the current AP MLD determines that one or more of to-be-sent data, unsuccessfully sent data, and successfully sent data exist in the send buffer starting from the window start location. This indicates that when the current AP MLD supports the first capability, the current AP MLD may retain the successfully sent data that starts from the window start location and that is in the send buffer.

302: The current AP MLD sends all the data in the send buffer to the target AP MLD.

Correspondingly, the target AP MLD receives all the data from the send buffer of the current AP MLD. Optionally, the method further includes: The target AP MLD receives address information of the current AP MLD (for example, a MAC address of the current AP MLD) from the non-AP MLD; and when the non-AP MLD associated with the current AP MLD is tentatively associated with the target AP MLD, the target AP MLD sends third information to the current AP MLD based on the address information of the current AP MLD, where the third information is used to request all the data in the send buffer.

In a possible implementation, the current AP MLD may send all the data in the send buffer to the target AP MLD through a single transmission or a plurality of transmissions.

For Manner 1.1, when the current AP MLD determines that one or more of to-be-sent data and unsuccessfully sent data exist in the send buffer starting from the window start location, all the data in the send buffer may include one or more of the to-be-sent data and the unsuccessfully sent data that start from the window start location and that are in the send buffer. When the current AP MLD further determines that the successfully sent data exists in the send buffer starting from the window start location, all the data further includes the successfully sent data.

For Manner 1.2, all the data in the send buffer may include one or more of the to-be-sent data and the unsuccessfully sent data that start from the window start location and that are in the send buffer.

For Manner 1.3, all the data in the send buffer may include one or more of the to-be-sent data, the unsuccessfully sent data, and the successfully sent data that start from the window start location and that are in the send buffer.

303: When the tentative association between the target AP MLD and the non-AP MLD is activated, the target AP MLD sends the data that is from the current AP MLD to the non-AP MLD.

Correspondingly, the non-AP MLD receives all the data from the send buffer of the current AP MLD through the target AP MLD.

Step 303 may be implemented in at least the following two manners. Details are as follows:
Manner 2.1: The target AP MLD receives, from the current AP MLD, BA session information between the current AP MLD and the non-AP MLD, and the target AP MLD sends the data that is from the current AP MLD to the non-AP MLD based on the BA session information. Optionally, the method further includes: The target AP MLD sends fourth information to the current AP MLD based on the address information of the current AP MLD, where the fourth information is used to request the BA session information. Optionally, that the target AP MLD sends the data that is from the current AP MLD to the non-AP MLD based on the BA session information between the current AP MLD and the non-AP MLD may also be understood as follows: The target AP MLD sends the data that is from the current AP MLD to the non-AP MLD on a BA session between the current AP MLD and the non-AP MLD. In a possible implementation, the target AP MLD may send the data that is from the current AP MLD to the non-AP MLD through a single transmission or a plurality of transmissions. For example, the target AP MLD may send one data frame to the non-AP MLD based on the BA session information, where the data frame may include the data. For another example, the target AP MLD may send a plurality of data frames to the non-AP MLD based on the BA session information, where one of the plurality of data frames may include one or more pieces of the data. This indicates that the target AP MLD needs to use the BA session information between the current AP MLD and the non-AP MLD. This can reduce or avoid service interruption in a roaming handover process of the non-AP MLD, and further improve communication reliability of the non-AP MLD in the roaming process.

Manner 2.2: The target AP MLD sends the data that is from the current AP MLD to the non-AP MLD based on BA session information between the target AP MLD and the non-AP MLD. The BA session information may be obtained through negotiation between the target AP MLD and the non-AP MLD. A specific negotiation process is not limited herein. Optionally, that the target AP MLD sends the data that is from the current AP MLD to the non-AP MLD based on the BA session information may also be understood as follows: The target AP MLD sends the data to the non-AP MLD on a BA session between the target AP MLD and the non-AP MLD. In a possible implementation, the target AP MLD may send the data to the non-AP MLD through a single transmission or a plurality of transmissions. For example, the target AP MLD may send one data frame to the non-AP MLD based on the BA session information, where the data frame may include the data. For another example, the target AP MLD may send a plurality of data frames to the non-AP MLD based on the BA session information, where one of the plurality of data frames may include one or more pieces of the data. This indicates that the target AP MLD sends the data that is from the current AP MLD to the non-AP MLD without using the BA session information between the current AP MLD and the non-AP MLD, thereby avoiding BA session transfer.

It may be understood that there is a correspondence between Manner 1.1 to Manner 1.3 in step 301 and Manner 2.1 and Manner 2.2 in step 303. Details are as follows:
When Manner 1.1 is used in step 301, step 303 may be implemented in Manner 2.1 or Manner 2.2.

When Manner 1.2 is used in step 301, step 303 may be implemented in Manner 2.1. In other words, when the current AP MLD does not support the first capability and the current AP MLD determines that the non-AP MLD triggers the tentative association with the target AP MLD, the current AP MLD retains the BA session information between the current AP MLD and the non-AP MLD, and sends the BA session information to the target AP MLD, so that the target AP MLD may send the data that is from the current AP MLD to the non-AP MLD based on the BA session information.

When Manner 1.3 is used in step 301, step 303 may be implemented in Manner 2.2. In other words, when the current AP MLD supports the first capability and the current AP MLD determines that the non-AP MLD triggers the tentative association with the target AP MLD, the current AP MLD deletes the BA session information between the current AP MLD and the non-AP MLD, so that the target AP MLD may send the data that is from the current AP MLD to the non-AP MLD based on the BA session information between the target AP MLD and the non-AP MLD.

The tentative association between the target AP MLD and the non-AP MLD may be activated in at least two of the following implementations. Details are as follows:

Manner 3.1: The target AP MLD receives second information from the current AP MLD, where the second information indicates that all data in a send buffer (that is, the send buffer of the current AP MLD and a send buffer of the non-AP MLD) has been transmitted. This is similar to step 203 in FIG. 2. Details are not described herein again.

Manner 3.2: The target AP MLD receives tenth information from the non-AP MLD, where the tenth information indicates that the target AP MLD is allowed to send downlink data. This is similar to step 205 in FIG. 2. Details are not described herein again.

That "the tentative association between the target AP MLD and the non-AP MLD is activated" in this application may be understood as at least one of the following: The non-AP MLD has roamed to the target AP MLD, and the like.

Optionally, the data from the current AP MLD may be included in a to-be-sent queue of the target AP MLD, and the to-be-sent queue is used to buffer data to be sent by the target AP MLD to the non-AP MLD. When the to-be-sent queue further includes one or more pieces of data from a gateway device, the data from the current AP MLD is located before the one or more pieces of data in the to-be-sent queue. The target AP MLD first sends data in the front of the to-be-sent queue. As shown in FIG. 4, the data from the current AP MLD includes data whose SNs are respectively 6 to 9, data from the gateway device includes data whose SNs are respectively 10 to 13, and the data whose SNs are respectively 6 to 9 is located before the data whose SNs are respectively 10 to 13 in the to-be-sent queue. Therefore, the target AP MLD may first send data whose SN is 6 and then send data whose SN is 7, and the rest may be deduced by analogy.

In the foregoing embodiment, that the non-AP MLD triggers the tentative association with the target AP MLD indicates that the non-AP MLD starts to roam to the target AP MLD. In this case, the current AP MLD may send all the data in the send buffer to the target AP MLD, so that the target AP MLD may forward the data that is from the current AP MLD to the non-AP MLD. This reduces the packet loss in the roaming handover process of the non-AP MLD, and further improves communication reliability of the non-AP MLD in the roaming process.

Optionally, the following separately describes some detailed solutions in detail with reference to Manner 1.1 to Manner 1.3 in step 301 in the embodiment shown in FIG. 3. For details, refer to the following Example 1 to Example 3.

### Example 1

In a possible implementation, the method further includes: The current AP MLD sends sixth information to the non-AP MLD, where the sixth information indicates the non-AP MLD to retain the BA session information between the current AP MLD and the non-AP MLD. Optionally, the sixth information may include a service identifier, and the service identifier is associated with the BA session information between the current AP MLD and the non-AP MLD. This ensures that BA session transfer can be performed when the non-AP MLD roams to the target AP MLD, to avoid the packet loss caused by roaming handover. In addition, when the sixth information includes the service identifier, the non-AP MLD may retain the BA session information associated with the service identifier.

Optionally, the sixth information may further indicate the non-AP MLD to retain data in a receive buffer of the non-AP MLD and/or a scoreboard of the non-AP MLD. The receive buffer is configured to buffer data received by the non-AP MLD from the current AP MLD. This ensures that the data in the receive buffer is not cleared when the non-AP MLD roams to the target AP MLD.

For example, the sixth information may be carried in a request mode (request mode) field. For example, the sixth information is 1 bit of a reserved (reserved) field in the request mode field. Optionally, the request mode field may be located in a BTM request (request) frame. The BTM request frame may further include another field. Details are not described herein.

In a possible implementation, the method further includes: The current AP MLD sends seventh information to the non-AP MLD, where the seventh information indicates that the current AP MLD supports BA session transfer (BA session transfer supported). Optionally, the seventh information may be carried in a neighbor report element (neighbor report element) field. A radio frame in which the neighbor report element field is located is not limited in this application.

In a possible implementation, the method further includes: The current AP MLD receives eighth information from the non-AP MLD, where the eighth information indicates the current AP MLD to retain the BA session information between the current AP MLD and the non-AP MLD. Optionally, the eighth information may include a service identifier, and the service identifier is associated with the BA session information between the current AP MLD and the non-AP MLD. This ensures that BA session transfer can be performed when the non-AP MLD roams to the target AP MLD, to avoid the packet loss caused by roaming handover. In addition, when the eighth information includes the service identifier, the non-AP MLD may retain the BA session information associated with the service identifier.

Optionally, the eighth information may be carried in a status code (status code) field. Optionally, the status code field may be located in a BTM response frame or a newly defined frame. When the status code field is located in the BTM response frame, the status code field may further indicate accept with no MSDU lost (ACCEPT with NO MSDU LOST).

### Example 2

In a possible implementation, the method further includes: The non-AP MLD deletes a key between the current AP MLD and the non-AP MLD. For example, when the non-AP MLD receives a disassociation frame, the non-AP MLD deletes the key between the current AP MLD and the non-AP MLD.

In a possible implementation, the method further includes: The non-AP MLD receives second indication information from the current AP MLD, where the second indication information indicates the non-AP MLD to delete the BA session information between the current AP MLD and the non-AP MLD, or the second indication information indicates that the current AP MLD supports the first capability; and the non-AP MLD deletes the BA session information. This avoids BA session transfer.

In a possible implementation, the method further includes: The current AP MLD deletes the key between the current AP MLD and the non-AP MLD. For example, when the current AP MLD supports the first capability and the current AP MLD determines that the non-AP MLD triggers the tentative association with the target AP MLD, the current AP MLD deletes the key between the current AP MLD and the non-AP MLD.

### Example 3

In a possible implementation, the method further includes: The current AP MLD sends first information to the non-AP MLD, where the first information indicates that data in a send buffer (that is, the send buffer of the current AP MLD) is not completely transmitted. This can prevent the non-AP MLD from triggering downlink transmission with the target AP MLD and/or deleting the key with the current AP MLD when the current AP MLD does not complete data transmission.

Optionally, the first information is carried in a more data field of a first frame, the more data field of the first frame is set to 1, and the first frame is a data frame or a disassociation frame. It should be understood that, when the first frame is the disassociation frame, the non-AP MLD may delete the key between the current AP MLD and the non-AP MLD.

Optionally, Example 1 and Example 3 may further include the following detailed solutions. Details are as follows:
In a possible implementation, the method further includes: The target AP MLD broadcasts fifth information, where the fifth information indicates that the target AP MLD supports BA session transfer.

For example, the fifth information may be carried in a neighbor report element field.

In a possible implementation, the method further includes: The target AP MLD receives ninth information from the non-AP MLD, where the ninth information indicates the target AP MLD to obtain the BA session information between the current AP MLD and the non-AP MLD. Optionally, the ninth information further includes a service identifier, and the service identifier is associated with the BA session information between the current AP MLD and the non-AP MLD. This indicates that the target AP MLD needs to obtain the BA session information between the current AP MLD and the non-AP MLD, to use the BA session information between the current AP MLD and the non-AP MLD. This can reduce or avoid service interruption in the roaming handover process of the non-AP MLD, and further improve communication reliability of the non-AP MLD in the roaming process. In addition, the target AP MLD may learn of BA session information that needs to be transferred from the current AP MLD to the target AP MLD.

The ninth information may be carried in a reassociation request (reassociation request) frame.

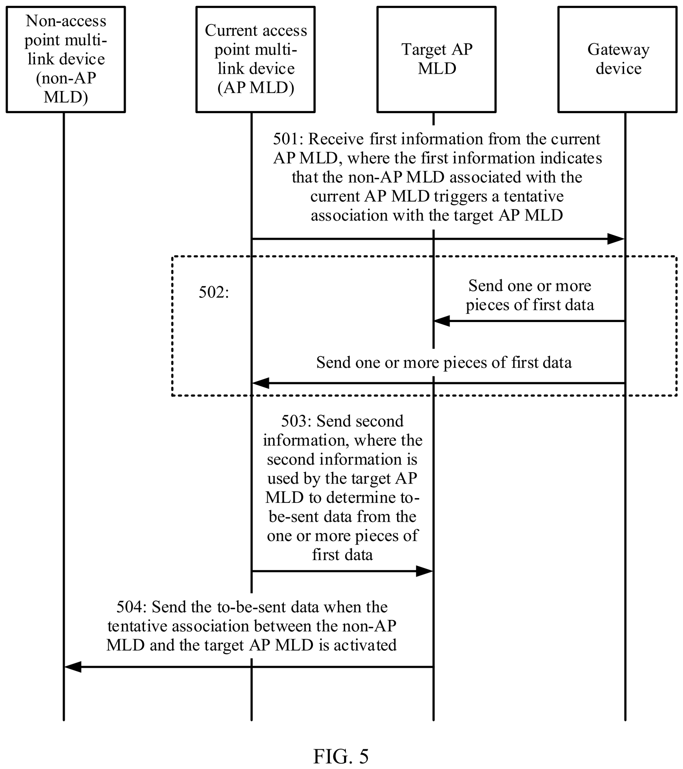

FIG. 5 is still another communication method according to an embodiment of this application. The communication method includes but is not limited to the following steps:

501: A gateway device receives first information from a current AP MLD, where the first information indicates that a non-AP MLD associated with the current AP MLD triggers a tentative association with a target AP MLD.

Correspondingly, the current AP MLD sends the first information to the gateway device. For example, when determining that the non-AP MLD associated with the current AP MLD triggers the tentative association with the target AP MLD, the current AP MLD sends the first information to the gateway device.

502: The gateway device separately sends one or more pieces of first data to the current AP MLD and the target AP MLD.

Correspondingly, the current AP MLD and the target AP MLD separately receive the one or more pieces of first data from the gateway device.

The first data may be an MSDU or an A-MSDU.

Optionally, the method further includes: The gateway device receives a data aggregation capability from the target AP MLD; the gateway device receives a data aggregation capability from the current AP MLD; and the gateway device generates the one or more pieces of first data based on the data aggregation capability of the target AP MLD and the data aggregation capability of the current AP MLD. For example, the gateway device performs data aggregation on one or more pieces of second data from a server based on the data aggregation capability of the target AP MLD and the data aggregation capability of the current AP MLD, to obtain the one or more pieces of first data. Optionally, one piece of first data may be obtained by aggregating one or more pieces of second data. Therefore, the first data herein may be an A-MSDU, and the second data may be an MSDU. In this way, a data transmission rate can be improved.

The data aggregation capability in this application indicates a data aggregation capability supported by a device (for example, the current AP MLD or the target AP MLD).

Optionally, the method further includes: The gateway device allocates SNs to the one or more pieces of first data; and the gateway device separately sends the SNs of the one or more pieces of first data to the current AP MLD and the target AP MLD. One piece of first data corresponds to one SN. The SNs of the one or more pieces of first data may be used by the current AP MLD to place the one or more pieces of first data in a to-be-sent queue of the current AP MLD, and the to-be-sent queue of the current AP MLD is used to buffer data to be sent by the current AP MLD to the non-AP MLD. The SNs of the one or more pieces of first data may be further used by the target AP MLD to place the one or more pieces of first data in a to-be-sent queue of the target AP MLD, and the to-be-sent queue of the target AP MLD is used to buffer data to be sent by the target AP MLD to the non-AP MLD.

503: The current AP MLD sends second information to the target AP MLD, where the second information is used by the target AP MLD to determine to-be-sent data from the one or more pieces of first data.

Correspondingly, the target AP MLD receives the second information from the current AP MLD.

In a possible implementation, the second information includes a sending status corresponding to the one or more pieces of first data, the sending status includes a success or a failure, and the to-be-sent data is data whose sending status is a failure and that is in the one or more pieces of first data. Optionally, the second information further includes a retransmission status corresponding to the one or more pieces of first data, the retransmission status includes a retransmission success or a retransmission failure, and the to-be-sent data further includes data whose retransmission status is a retransmission failure and that is in the one or more pieces of first data. Optionally, the second information may be included in BA session information between the current AP MLD and the non-AP MLD.

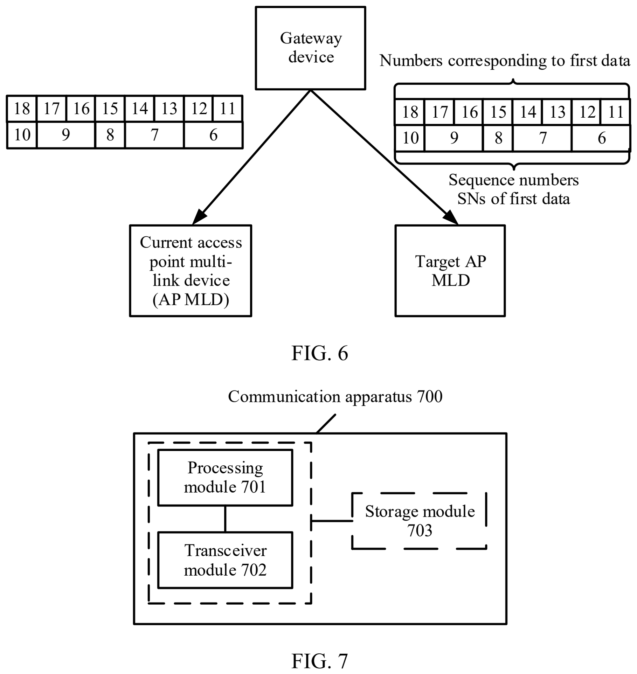

In another possible implementation, the second information indicates a start number corresponding to the to-be-sent data, and the to-be-sent data is data whose number is greater than or equal to the start number and that is in the one or more pieces of first data. It should be understood that, in this case, the method further includes: The current AP MLD receives, from the gateway device, numbers corresponding to the one or more pieces of first data. One piece of first data may correspond to one or more numbers. For example, the gateway device may number one or more pieces of second data in a sequence in which the one or more pieces of second data arrive at the gateway device, and one piece of first data may be obtained by aggregating the one or more pieces of second data. Therefore, one piece of first data may correspond to one or more numbers. For example, as shown in FIG. 6, numbers corresponding to first data whose SN is 6 are 11 and 12, numbers corresponding to first data whose SN is 7 are 13 and 14, and a number corresponding to first data whose SN is 8 is 15. The rest are similar, and details are not described herein again.

504: When the tentative association between the target AP MLD and the non-AP MLD is activated, the target AP MLD sends the to-be-sent data to the non-AP MLD.

Correspondingly, the non-AP MLD receives the to-be-sent data from the target AP MLD.

Optionally, the second information further indicates that the target AP MLD is allowed to send downlink data. In this way, the target AP MLD may determine that the tentative association with the non-AP MLD is activated.

When the second information is included in the BA session information between the current AP MLD and the non-AP MLD, step 504 may include: The target AP MLD sends the to-be-sent data to the non-AP MLD based on the BA session information. Optionally, that the target AP MLD sends the to-be-sent data to the non-AP MLD based on the BA session information may also be understood as follows: The target AP MLD sends data that is from the current AP MLD to the non-AP MLD on a BA session between the current AP MLD and the non-AP MLD. This indicates that the target AP MLD may still use the BA session information between the current AP MLD and the non-AP MLD, thereby reducing or avoiding service interruption in a roaming handover process of the non-AP MLD, and further improving communication reliability of the non-AP MLD in the roaming process.

Optionally, the method further includes: The target AP MLD receives address information of the current AP MLD (for example, a MAC address of the current AP MLD) from the non-AP MLD; and when the non-AP MLD associated with the current AP MLD is tentatively associated with the target AP MLD, the target AP MLD sends third information to the current AP MLD based on the address information of the current AP MLD, where the third information is used to request the BA session information.

Optionally, there may be one or more pieces of to-be-sent data, and the target AP MLD may send a plurality of pieces of to-be-sent data to the non-AP MLD through a single transmission or a plurality of transmissions. For example, the target AP MLD may send one data frame to the non-AP MLD based on the BA session information, where the data frame may include the plurality of pieces of to-be-sent data. For another example, the target AP MLD may send a plurality of data frames to the non-AP MLD based on the BA session information, where one of the plurality of data frames may include one or more of the plurality of pieces of to-be-sent data.

When the second information indicates the start number corresponding to the to-be-sent data, step 504 may include: The target AP MLD sends the to-be-sent data to the non-AP MLD based on BA session information between the target AP MLD and the non-AP MLD. The BA session information may be obtained through negotiation between the target AP MLD and the non-AP MLD. A specific negotiation process is not limited herein. Optionally, that the target AP MLD sends the to-be-sent data to the non-AP MLD based on the BA session information between the target AP MLD and the non-AP MLD may also be understood as follows: The target AP MLD sends the to-be-sent data to the non-AP MLD on a BA session between the target AP MLD and the non-AP MLD.

Optionally, there may be one or more pieces of to-be-sent data, and the target AP MLD may send a plurality of pieces of to-be-sent data to the non-AP MLD through a single transmission or a plurality of transmissions. For example, the target AP MLD may send one data frame to the non-AP MLD based on the BA session information, where the data frame may include the plurality of pieces of to-be-sent data. For another example, the target AP MLD may send a plurality of data frames to the non-AP MLD based on the BA session information, where one of the plurality of data frames may include one or more of the plurality of pieces of to-be-sent data. This indicates that the target AP MLD sends the to-be-sent data to the non-AP MLD without using the BA session information between the current AP MLD and the non-AP MLD, thereby avoiding BA session transfer.

In the foregoing embodiment, the gateway device may learn, from the current AP MLD, that the non-AP MLD associated with the current AP MLD triggers the tentative association with the target AP MLD. This indicates that the non-AP MLD starts to roam to the target AP MLD. In this case, the gateway device may separately send same data to the current AP MLD and the target AP MLD, so that when the non-AP MLD hands over data transmission from the current AP MLD to the target AP MLD, the current AP MLD may notify the target AP MLD of data that needs to be sent to the non-AP MLD. In this way, when the current AP MLD does not migrate data to the target AP MLD, the target AP MLD can send, to the non-AP MLD, data that is not successfully sent by the current AP MLD to the non-AP MLD. Therefore, a delay caused by data migration can be avoided, the packet loss in the roaming handover process of the non-AP MLD can be reduced, and communication reliability of the non-AP MLD in the roaming process can be further improved.

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, an AP MLD (for example, a current AP MLD or a target AP MLD), a non-AP MLD, or a gateway device may be divided into functional modules based on the foregoing method examples. For example, each functional module may be obtained through division corresponding to each function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

FIG. 7 is a diagram of a structure of a communication apparatus according to an embodiment of this application. A communication apparatus 700 may be applied to the method shown in any one or more of the embodiments in FIG. 2, FIG. 3, or FIG. 5. As shown in FIG. 7, the communication apparatus 700 includes a processing module 701 and a transceiver module 702. The processing module 701 may be one or more processors, and the transceiver module 702 may be a transceiver or a communication interface. The communication apparatus may be configured to implement functions of an AP MLD (for example, a current AP MLD or a target AP MLD), a non-AP MLD, or a gateway device in any one of the foregoing method embodiments, or configured to implement functions of a network element in any one of the foregoing method embodiments. The network element or network function may be a network element in a hardware device, a software function running on dedicated hardware, or a virtualization function instantiated on a platform (for example, a cloud platform). Optionally, the communication apparatus 700 may further include a storage module 703, configured to store program code and data of the communication apparatus 700.

In an example, when the communication apparatus is used as an AP MLD (for example, a current AP MLD or a target AP MLD) or a chip used in an AP MLD (for example, a current AP MLD or a target AP MLD), the communication apparatus performs steps performed by the AP MLD (for example, the current AP MLD or the target AP MLD) in the foregoing method embodiments. The transceiver module 702 is configured to specifically perform sending and/or receiving actions performed by the AP MLD (for example, the current AP MLD or the target AP MLD) in any one or more embodiments in FIG. 2, FIG. 3, or FIG. 5, for example, support the AP MLD (for example, the current AP MLD or the target AP MLD) in performing another process of the technology described in this specification. The processing module 701 may be configured to support the communication apparatus 700 in performing processing actions in the foregoing method embodiments, for example, support the AP MLD (for example, the current AP MLD or the target AP MLD) in performing another process of the technology described in this specification.

In still another example, when the communication apparatus is used as a non-AP MLD or a chip used in a non-AP MLD, the communication apparatus performs steps performed by the non-AP MLD in the foregoing method embodiments. The transceiver module 702 is configured to specifically perform sending and/or receiving actions performed by the non-AP MLD in any one or more embodiments in FIG. 2, FIG. 3, or FIG. 5, for example, support the non-AP MLD in performing another process of the technology described in this specification. The processing module 701 may be configured to support the communication apparatus 700 in performing processing actions in the foregoing method embodiments, for example, support the non-AP MLD in performing another process of the technology described in this specification.

In another example, when the communication apparatus is used as a gateway device or a chip used in a gateway device, the communication apparatus performs steps performed by the gateway device in the foregoing method embodiments. The transceiver module 702 is configured to specifically perform sending and/or receiving actions performed by the gateway device in any one or more of the embodiments in FIG. 2, FIG. 3, or FIG. 5, for example, support the gateway device in performing another process of the technology described in this specification. The processing module 701 may be configured to support the communication apparatus 700 in performing processing actions in the foregoing method embodiments, for example, support the gateway device in performing another process of the technology described in this specification.

Optionally, when an AP MLD (for example, a current AP MLD or a target AP MLD), a non-AP MLD, or a gateway device is a chip, the processing module 701 may be one or more processors, and the transceiver module 702 may be a transceiver, or the transceiver module 702 may be a sending module and a receiving module. The sending module may be a transmitter, and the receiving module may be a receiver. The sending module and the receiving module are integrated into one component, for example, a transceiver. In this embodiment of this application, the processor and the transceiver may be coupled, or the like. A connection manner between the processor and the transceiver is not limited in this embodiment of this application. In a process of performing the foregoing methods, a process of sending information in the foregoing methods may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing methods may be understood as a process of receiving the input information by the processor. When the processor receives the input information, the transceiver receives the information, and inputs the information to the processor. Further, after the transceiver receives the information, other processing may need to be performed on the information before the information is input into the processor.

The foregoing descriptions are possible product forms of the communication apparatus shown in FIG. 7. It should be understood that any form of product that has functions of the communication apparatus in FIG. 7 falls within the protection scope of embodiments of this application. It should be further understood that the foregoing descriptions are merely examples, and a product form of the communication apparatus in this embodiment of this application is not limited thereto.

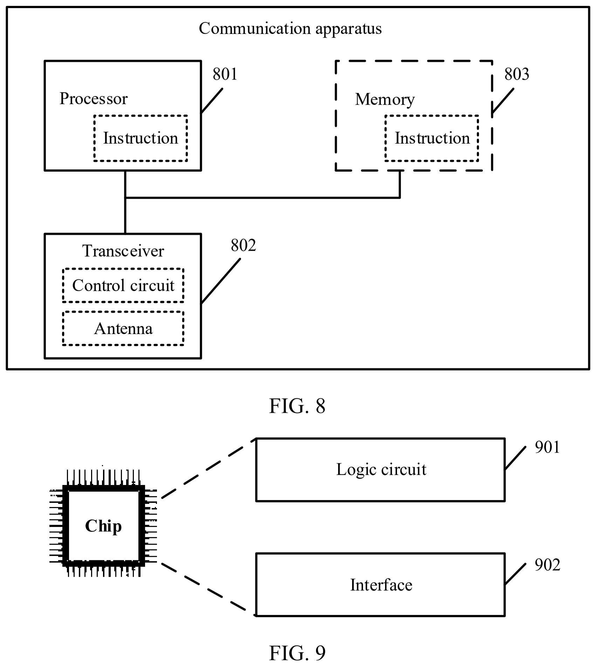

FIG. 8 is a diagram of a structure of another communication apparatus according to an embodiment of this application. The communication apparatus may be an AP MLD (for example, a current AP MLD or a target AP MLD), a non-AP MLD, a gateway device, or a chip in an AP MLD, a non-AP MLD, or a gateway device. FIG. 8 shows only main components of the communication apparatus. In addition to a processor 801 and a transceiver 802, the communication apparatus may further include a memory 803 and an input/output apparatus (not shown in the figure). The processor 801 is mainly configured to: process a communication protocol and communication data, control the entire communication apparatus, execute a software program, and process data of the software program. The memory 803 is mainly configured to store the software program and the data. The transceiver 802 may include a control circuit and an antenna. The control circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user, and output data to the user.

After the communication apparatus is powered on, the processor 801 may read the software program in the memory 803, interpret and execute instructions of the software program, and process the data of the software program. When data needs to be sent in a wireless manner, the processor 801 performs baseband processing on the to-be-sent data, and then outputs a baseband signal to a radio frequency circuit, and the radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 801; and the processor 801 converts the baseband signal into data and processes the data. In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 801, the transceiver 802, and the memory 803 may be connected through a communication bus.

For example, when the communication apparatus is configured to perform steps, methods, or functions performed by the AP MLD (for example, the current AP MLD or the target AP MLD) in the foregoing method embodiments, the processor 801 may be configured to perform another process of the technology described in this specification; and the transceiver 802 may be configured to perform step 202 in FIG. 2, and/or another process of the technology described in this specification.

For another example, when the communication apparatus is configured to perform steps, methods, or functions performed by the non-AP MLD in the foregoing method embodiments, the processor 801 may be configured to perform another process of the technology described in this specification; and the transceiver 802 may be configured to perform step 205 in FIG. 2, and/or another process of the technology described in this specification.

For another example, when the communication apparatus is configured to perform steps, methods, or functions performed by the gateway device in the foregoing method embodiments, the processor 801 may be configured to perform another process of the technology described in this specification; and the transceiver 802 may be configured to perform step 206 in FIG. 2, and/or another process of the technology described in this specification.

In an implementation, the processor 801 may store instructions. The instructions may be a computer program. The computer program is run on the processor 801, to enable the communication apparatus to perform the method described in the foregoing method embodiments. The computer program may be embedded in the processor 801. In this case, the processor 801 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further include more components than those in FIG. 8. This is not limited in this embodiment of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 7, the processing module 701 may be one or more logic circuits, and the transceiver module 702 may be an input/output interface, or may be referred to as a communication interface, an interface circuit, an interface, or the like. Alternatively, the transceiver module 702 may be a sending module and a receiving module. The sending module may be an output interface, and the receiving module may be an input interface. The sending module and the receiving module are integrated into one unit, for example, an input/output interface.

FIG. 9 is a diagram of a structure of still another communication apparatus according to this application. As shown in FIG. 9, the communication apparatus shown in FIG. 9 includes a logic circuit 901 and an interface 902. That is, the processing module 701 may be implemented by using the logic circuit 901, and the transceiver module 702 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the communication apparatus is a chip, and the chip includes the logic circuit 901 and the interface 902. Optionally, the logic circuit and the interface may be further coupled to each other. A specific connection manner of between the logic circuit and the interface is not limited in this embodiment of this application.

For example, when the communication apparatus is configured to perform steps, methods, or functions performed by the current AP MLD in the foregoing method embodiments, the logic circuit 901 is configured to: determine that data exists in a send buffer of the current AP MLD, where the send buffer is used to buffer data of the current AP MLD and data of a non-AP MLD, and the non-AP MLD triggers a tentative association with a target AP MLD; and the interface 902 is configured to send all the data in the send buffer to the non-AP MLD or the target AP MLD, where the target AP MLD is configured to send the data that is from the current AP MLD to the non-AP MLD.

For another example, when the communication apparatus is configured to perform steps, methods, or functions performed by the non-AP MLD in the foregoing method embodiments, the interface 902 is configured to: receive all data from a send buffer of a current AP MLD, where the send buffer is used to buffer data of the current AP MLD and data of the non-AP MLD; or receive all data from a send buffer of a current AP MLD through a target AP MLD, where the non-AP MLD triggers a tentative association with the target AP MLD.

For another example, when the communication apparatus is configured to perform steps, methods, or functions performed by the target AP MLD in the foregoing method embodiments, the interface 902 is configured to: receive all data from a send buffer of a current AP MLD, where the send buffer is used to buffer data of the current AP MLD and data of a non-AP MLD, and the non-AP MLD triggers a tentative association with the target AP MLD; and when the tentative association between the target AP MLD and the non-AP MLD is activated, send the data that is from the current AP MLD to the non-AP MLD.

For another example, when the communication apparatus is configured to perform steps, methods, or functions performed by the gateway device in the foregoing method embodiments, the interface 902 is configured to: receive first information from a current AP MLD, where the first information indicates that a non-AP MLD associated with the current AP MLD triggers a tentative association with a target AP MLD; and separately send one or more pieces of first data to the current AP MLD and the target AP MLD.

It may be understood that the communication apparatus shown in this embodiment of this application may implement the methods provided in embodiments of this application in a form of hardware, or may implement the methods provided in embodiments of this application in a form of software. This is not limited in this embodiment of this application. For specific implementations of the embodiment shown in FIG. 9, refer to the foregoing embodiments. Details are not described herein again.

An embodiment of this application further provides a communication apparatus. The communication apparatus includes at least one processor and a memory. The memory is configured to store a computer program or instructions. The at least one processor is configured to execute the computer program or the instructions in the memory, so that the method according to any one or more of the embodiments in FIG. 2, FIG. 3, and FIG. 5 is performed.

An embodiment of this application further provides a computer-readable storage medium. The computer-readable storage medium stores computer instructions. When the computer instructions are executed, a computer is enabled to perform the method according to any one or more of the embodiments in FIG. 2, FIG. 3, and FIG. 5.

An embodiment of this application further provides a computer program product. The computer program product includes computer program code. When the computer program code is run by a computer, the computer is enabled to perform the method according to any one or more of the embodiments in FIG. 2, FIG. 3, and FIG. 5.

An embodiment of this application further provides a chip. The chip includes at least one processor and an interface. The processor is configured to read and execute instructions stored in a memory. When the instructions are run, the chip is enabled to perform the method according to any one or more of the embodiments in FIG. 2, FIG. 3, and FIG. 5.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units are integrated into one unit. The integrated unit may be implemented in a form of hardware, or may be implemented in a form of a software network element unit.

When the integrated unit is implemented in a form of a software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes instructions for instructing a computer device (which may be a personal computer, a terminal device, a cloud server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a current access point multi-link device, that data exists in a send buffer of the current access point multi-link device, wherein the send buffer is used to buffer data of the current access point multi-link device and data of a non-access point multi-link device, and the non-access point multi-link device triggers a tentative association with a target access point multi-link device; and
sending, by the current access point multi-link device, all the data in the send buffer to the non-access point multi-link device or the target access point multi-link device, wherein the target access point multi-link device is configured to send the data that is from the current access point multi-link device to the non-access point multi-link device.

2. The method according to claim 1, wherein it is predefined in a protocol that when the current access point multi-link device determines that the non-access point multi-link device triggers the tentative association with the target access point multi-link device, data that starts from a window start location and that is in the send buffer is not cleared.

3. The method according to claim 1 or 2, wherein the method further comprises:
when the current access point multi-link device does not support a first capability, clearing, by the current access point multi-link device, successfully sent data in the send buffer; or
when the current access point multi-link device supports the first capability, retaining, by the current access point multi-link device, successfully sent data that starts from the window start location and that is in the send buffer, wherein
the first capability is a capability of the current access point multi-link device to retain the successfully sent data that starts from the window start location and that is in the send buffer when the current access point multi-link device determines that the non-access point multi-link device triggers the tentative association with the target access point multi-link device.

4. The method according to claim 3, wherein the method further comprises:
when the current access point multi-link device supports the first capability and the current access point multi-link device determines that the non-access point multi-link device triggers the tentative association with the target access point multi-link device, deleting, by the current access point multi-link device, block acknowledgement session information between the current access point multi-link device and the non-access point multi-link device; or
when the current access point multi-link device does not support the first capability and the current access point multi-link device determines that the non-access point multi-link device triggers the tentative association with the target access point multi-link device, retaining, by the current access point multi-link device, block acknowledgement session information between the current access point multi-link device and the non-access point multi-link device.

5. The method according to any one of claims 1 to 4, wherein the method further comprises:
sending, by the current access point multi-link device to the target access point multi-link device, the block acknowledgement session information between the current access point multi-link device and the non-access point multi-link device.

6. The method according to any one of claims 1 to 5, wherein the method further comprises:
sending, by the current access point multi-link device, first information to the non-access point multi-link device, wherein the first information indicates that the data in the send buffer is not completely transmitted.

7. The method according to claim 6, wherein the first information is carried in a more data field of a first frame, the more data field of the first frame is set to 1, and the first frame is a data frame or a disassociation frame.

8. The method according to any one of claims 1 to 7, wherein the method further comprises:
sending, by the current access point multi-link device, second information to the non-access point multi-link device, wherein the second information indicates that all the data in the send buffer has been transmitted.

9. The method according to claim 8, wherein the second information is carried in a more data field of a second frame, the more data field of the second frame is set to 0, and the second frame is a data frame or a disassociation frame.

10. A communication method, comprising:
receiving, by a non-access point multi-link device, all data from a send buffer of a current access point multi-link device, wherein the send buffer is used to buffer data of the current access point multi-link device and data of the non-access point multi-link device; or
receiving, by the non-access point multi-link device through a target access point multi-link device, all the data from the send buffer of the current access point multi-link device, wherein
the non-access point multi-link device triggers a tentative association with the target access point multi-link device.

11. The method according to claim 10, wherein the method further comprises:
receiving, by the non-access point multi-link device, first information from the current access point multi-link device, wherein the first information indicates that the data in the send buffer is not completely transmitted.

12. The method according to claim 11, wherein the first information is carried in a more data field of a first frame, the more data field of the first frame is set to 1, and the first frame is a data frame or a disassociation frame.

13. The method according to any one of claims 10 to 12, wherein the method further comprises:
receiving, by the non-access point multi-link device, second information from the current access point multi-link device, wherein the second information indicates that all the data in the send buffer has been transmitted.

14. The method according to claim 13, wherein the second information is carried in a more data field of a second frame, the more data field of the second frame is set to 0, and the second frame is a data frame or a disassociation frame.

15. The method according to any one of claims 10 to 14, wherein it is predefined in a protocol that, when the non-access point multi-link device triggers the tentative association with the target access point multi-link device, at least one of the following is retained: a key between the current access point multi-link device and the non-access point multi-link device, block acknowledgement session information between the current access point multi-link device and the non-access point multi-link device, a key between the target access point multi-link device and the non-access point multi-link device, or block acknowledgement session information between the target access point multi-link device and the non-access point multi-link device.

16. A communication method, comprising:
receiving, by a target access point multi-link device, all data from a send buffer of a current access point multi-link device, wherein the send buffer is used to buffer data of the current access point multi-link device and data of a non-access point multi-link device, and the non-access point multi-link device triggers a tentative association with the target access point multi-link device; and
when the tentative association between the non-access point multi-link device and the target access point multi-link device is activated, sending, by the target access point multi-link device, the data that is from the current access point multi-link device to the non-access point multi-link device.

17. The method according to claim 16, wherein the method further comprises:
receiving, by the target access point multi-link device from the current access point multi-link device, block acknowledgement session information between the current access point multi-link device and the non-access point multi-link device; and
sending, by the target access point multi-link device, the data that is from the current access point multi-link device to the non-access point multi-link device comprises:
sending, by the target access point multi-link device, the data that is from the current access point multi-link device to the non-access point multi-link device based on the block acknowledgement session information.

18. A communication apparatus, comprising a unit or module configured to implement the method according to any one of claims 1 to 17.

19. A communication apparatus, wherein the communication apparatus comprises at least one processor and a memory; and
the memory is configured to store a computer program or instructions, and the at least one processor is configured to execute the computer program or the instructions in the memory, so that the method according to any one of claims 1 to 17 is performed.

20. A communication system, wherein the communication system comprises a current access point multi-link device and a non-access point multi-link device;
the current access point multi-link device is configured to perform the method according to any one of claims 1 to 9; and
the non-access point multi-link device is configured to perform the method according to any one of claims 10 to 15.

21. A communication system, wherein the communication system comprises a current access point multi-link device, a non-access point multi-link device, and a target access point multi-link device;
the current access point multi-link device is configured to perform the method according to any one of claims 1 to 9;
the non-access point multi-link device is configured to perform the method according to any one of claims 10 to 15; and
the target access point multi-link device is configured to perform the method according to either of claims 16 and 17.

22. A computer-readable storage medium, wherein the computer-readable storage medium stores computer instructions, and when the computer instructions are executed, a computer is enabled to perform the method according to any one of claims 1 to 17.

23. A computer program product, wherein the computer program product comprises computer program code, and when the computer program code is run by a computer, the computer is enabled to perform the method according to any one of claims 1 to 17.

24. A chip, wherein the chip comprises at least one processor and an interface, the processor is configured to read and execute instructions stored in a memory, and when the instructions are run, the chip is enabled to perform the method according to any one of claims 1 to 17.
